# EUROPEAN PATENT APPLICATION

(11) **EP 4 105 180 A1**
(43) Date of publication of application: **21.12.2022**
(21) Application number: 20918838.2
(22) Date of filing: 27.05.2020
(51) Int. Cl.: C01G 33/00

(54) **NIOBIC ACID AQUEOUS SOLUTION**

(30) Priority: 14.02.2020 JP 2020023788
(71) Applicant: Mitsui Mining & Smelting Co., Ltd, Shinagawa-ku Tokyo 141-8584 (JP)
(72) Inventor: HARA, Syuhei, Omuta-shi, Fukuoka 836-0003 (JP); ARAKAWA, Daiki, Omuta-shi, Fukuoka 836-0003 (JP); KUMAGAI, Akinori, Omuta-shi, Fukuoka 836-0003 (JP)
(74) Representative: Novagraaf Technologies
(86) International application number: PCT/JP2020/020819
(87) International publication number: WO 2021/161550

(57) **Abstract**

Provided is a niobic acid aqueous solution having higher dispersibility than an ammonium niobate sol and having better solubility than a complex salt of niobic acid. Proposed is a niobic acid aqueous solution containing 0.1 to 40 mass% of niobium in terms of Nb₂O₅, wherein no particles of 1.0 nm or more are detected in the particle size distribution measurement using dynamic light scattering. As a method for producing the same, also proposed is a production method including adding a niobium fluoride aqueous solution containing 1 to 100 g/L of niobium in terms of Nb₂O₅ to an ammonia aqueous solution having an ammonia concentration of 20 to 30 mass% and reacting them, removing fluorine from the obtained reaction solution, and adding at least one selected from amines and ammonia to the obtained solution and reacting the

## Description

### Technical Field

The present invention relates to an aqueous solution containing niobium or/and niobic acid (also referred to as "niobic acid aqueous solution").

### Background Art

Niobium itself is silver-white, but when a passive oxide film is formed on its surface, it has the property of shining in beautiful rainbow color. It is also relatively lightweight and resistant to many chemicals. It has a high melting point (468°C), low vapor pressure, high elastic modulus, high thermal stability, low thermal expansion, and the highest superconducting transition temperature of any element. Furthermore, it can be easily molded even at low temperatures and has the property of having high biocompatibility.

Since niobium has such various properties, niobium or/and niobic acid has a wide variety of applications. For example, it is used in coin slots, corrosion-resistant evaporation boats for coatings, crucibles for diamond production, implant materials, and materials for superconducting cables and magnets. Recently, single crystals of lithium niobate have been used as nonlinear optical materials, potassium niobate has been studied and developed as a candidate for non-lead piezoelectric ceramics, and niobic acid is also being studied as a catalyst because it exhibits solid acidity.

If such niobium or/and niobic acid can be made into a solution, the above properties can be added to various materials by coating, further expanding the applications of niobium or/and niobic acid. However, it is not easy to make niobium or/and niobic acid into a solution using water, acids, or the like.

Conventionally, the method for producing a niobium solution was to use a niobium powder or niobium oxide as a starting material, and dissolve it with hydrofluoric acid or melt it by adding potassium bisulfate or the like.

As an invention relating to a solution containing niobium or/and niobic acid, for example, Patent Literature 1 discloses a method of obtaining a highly pure niobium solution with few impurities by using niobium chloride as a starting material, purifying the niobium chloride by distillation, then obtaining crystals in a chloride-free form, and dissolving the crystals to make a solution. Specifically, it discloses a method of producing a highly pure niobium solution, which includes a step of distilling niobium chloride in the presence of chlorine gas to obtain niobium chloride substantially free of sodium, aluminum, tantalum and iron; a step of mixing the obtained niobium chloride with water to obtain a slurry containing niobic acid; a step of separating the solids from the obtained slurry, then washing the solids with water; a step of drying the washed solids at a temperature of 0 to 50°C; and a step of mixing the dried solids with an aqueous solution containing a complexing agent.

Patent Literature 2 discloses the synthesis of a complex oxalic acid complexed salt and water-soluble Nb that dissolves in water at 5.2 Nb% (7.4% in terms of Nb₂O₅) at room temperature (20°C). That is, it discloses ammonium (bisaquooxobisoxalato)niobate (NH₄)[Nb(O)(C₂O₄)₂(H₂O)₂] and the hydrates thereof as a novel niobium compound, and as a method for producing the same, it also discloses a production method having a step of dissolving niobium hydroxide and oxalic acid in water, a step of adding ammonia, and a step of cooling the reaction mixture.

In addition, Patent Literature 3 discloses a niobium sol made by dispersing an atomized niobic acid compound in water. That is, it discloses an ammonium niobate sol substantially free of organic acids and wherein ammonia and niobic acid are in the range of NH₃/Nb₂O₅ (molar ratio) = 0.5 to 1.5 when dried at 100°C for 10 hours, and as a method for producing the same, it also discloses a production method having a step of mixing an aqueous solution of a niobium compound dissolved in hydrofluoric acid or a mixed acid of hydrofluoric acid and sulfuric acid, with an ammonia aqueous solution while maintaining a pH of 8 or more, and reacting them to obtain a dispersion solution containing fine particles of ammonium niobate, then filtering the dispersion solution and washing.

In addition, Patent Literature 4 discloses a method for producing a niobate sol, which includes a step of heating an ammonium niobate sol in the presence of an amine compound to remove ammonia, or washing an ammonium niobate sol mixed with an inorganic acid to remove ammonia, followed by heating in the presence of an amine compound.

### Citation List

### Patent Literature

Patent Literature 1: Japanese Patent Laid-Open No. 2012-87085
Patent Literature 2: Japanese Translation of PCT International Application Publication No. 2009-509985 (Japanese Patent No. 5222143)
Patent Literature 3: Japanese Patent Laid-Open No. 2011-190115 (Japanese Patent No. 5441264)
Patent Literature 4: Japanese Patent Laid-Open No. 2015-81220

### Summary of Invention

### Technical Problem

It is industrially useful if water can be used to dissolve niobium or/and niobic acid to make an aqueous solution. Conventionally, it is, for example, in a sol state as disclosed in Patent Literature 3 above, or even if referred to as an aqueous solution of niobium or/and niobic acid, the niobium or/and niobic acid is complexed with oxalic acid or the like, as disclosed in Patent Literature 2 above. However, one problem is that oxalic acid or the like used for complexation reduces the purity of niobium.

An object of the present invention is to provide a niobic acid aqueous solution having high dispersibility in water and good solubility in water, and a method for producing the same.

### Solution to Problem

The present invention proposes a niobic acid aqueous solution containing 0.1 to 40 mass% of niobium in terms of Nb₂O₅ is, wherein no particles of 1.0 nm or more are detected in the particle size distribution measurement using dynamic light scattering.

The present invention also proposes a method for producing a niobic acid aqueous solution including the following three steps:
(1) a step of adding a niobium fluoride aqueous solution containing 1 to 100 g/L of niobium in terms of Nb₂O₅ to an ammonia aqueous solution having an ammonia concentration of 10 to 30 mass%, and reacting them to obtain a niobium-containing precipitate
(2) a step of removing fluorine from the niobium-containing precipitate obtained in the above step
(3) a step of making the niobium-containing precipitate obtained by removing fluorine into a slurry, adding at least one selected from amines and ammonia, and reacting them.

### Advantageous Effects of Invention

The niobic acid aqueous solution proposed by the present invention is an aqueous solution in which no particles of 1.0 nm or more are detected in the particle size distribution measurement using dynamic light scattering, and therefore has at least high dispersibility in water and good solubility in water.

Furthermore, the niobic acid aqueous solution proposed by the present invention is an aqueous solution in which niobic acid is thus dissolved in water and niobium or/and niobic acid is not present as a particle, and therefore not only does it have excellent optical properties with a little light reflection or/and scattering, but it can also improve the reactivity as niobium or/and niobic acid.

### Brief Description of Drawings

[Figure 1] Figure 1 is an XRD pattern of the precipitate obtained by conducting a reactivity test with NaOH using the niobic acid aqueous solution obtained in Example 4.
[Figure 2] Figure 2 is an XRD pattern of the precipitate obtained by conducting a reactivity test with NaOH using the niobic acid aqueous solution obtained in Comparative Example 3.

### Description of Embodiments

Next, the present invention will be described based on embodiments. However, the present invention is not limited to the embodiments described below.

### <The Present Niobic Acid Aqueous Solution>

The niobic acid aqueous solution according to one embodiment of the present invention ("the present niobic acid aqueous solution") is a solution which contains niobium or/and niobic acid, and in which no particles of 1.0 nm or more are detected in the particle size distribution measurement using dynamic light scattering.

Although it could be confirmed that the present niobic acid aqueous solution contains niobium or/and niobic acid, the state in which it is present is still under investigation. However, while it has not been technically proven, it can be assumed that the niobic acid in the present niobic acid aqueous solution is present in water as an ion ionically bonded with an amine or/and ammonia.

In the present niobic acid aqueous solution, it is thought that while hydroxide ions are present as anions, halide ions such as fluoride ions and chloride ions are almost nonexistent, and amines or ammonia are present as cations, and therefore niobium is present as an anion such as NbO⁻.

Note that the niobium or/and niobic acid in the present niobic acid aqueous solution is not necessarily present in the state of Nb₂O₅. The content of niobium or/and niobic acid is indicated in terms of Nb₂O₅ based on the convention for indicating the Nb concentration.

The present niobic acid aqueous solution preferably contains 0.1 to 40 mass% niobium in terms of Nb₂O₅, of which a ratio of 0.5 mass% or more, and even 1 mass% or more is still more preferable, while a ratio of 30 mass% or less, and even 20 mass% or less is still more preferable.

The present niobic acid aqueous solution preferably contains a component derived from at least one selected from amines and ammonia.

Although not technically proven, it can be inferred that the ionic bonding of an amine or ammonia with niobic acid can increase its solubility in water.

The present niobic acid aqueous solution is a solution in which no particles of 1.0 nm or more are detected when the particle size distribution is measured using dynamic light scattering, and is preferably a solution in which no particles of 0.6 nm or more are detected. In other words, it is a solution in a completely dissolved state. Therefore, all of the niobate salts in the solution are water-soluble and it is clearly different from a sol.

Note that in the present invention, a liquid that contains niobic acid and in which no particles of 1.0 nm or more are detected when measured by dynamic light scattering, is referred to as a "niobic acid aqueous solution".

Dynamic light scattering is a method in which a solution such as a suspension solution is irradiated with light such as laser light, the light scattering intensity from a group of particles in Brownian motion is measured, and the particle size and distribution are determined from the temporal variation of the intensity. Here, the measurement is performed in accordance with JIS Z 8828:2019 "Particle size analysis
- Dynamic light scattering".

In the present invention, "particles of 1.0 nm or more are detected when the particle size distribution is measured" means that a reliable value for the particle size can be measured when the particle size is measured by dynamic light scattering. "No particles of 1.0 nm or more are detected" means either that the reliable measured value for the particle size is less than 1.0 nm when the particle size is measured by dynamic light scattering, or that a reliable value for the particle size cannot be measured, such as an erroneous value being displayed.

For example, in the case of a sol containing niobic acid, the colloidal particles are dispersed in a liquid, and the particle size of the colloidal particles is 1.0 nm or more. Therefore, particles of 1.0 nm or more will be detected when the particle size distribution is measured. In contrast, if a substance derived from niobic acid is dissolved as ions in water, no particles of 1.0 nm or more will be detected when the particle size is measured using dynamic light scattering.

Note that with respect to the measurement conditions of the above dynamic light scattering method, the higher the concentration of niobium, the more likely measurable particles are contained, and therefore it is preferable to perform the measurement after adjusting niobium to be contained at a concentration of 10 mass%, 15 mass% or 20 mass% in terms of Nb₂O₅.

### (Other Components)

The present niobic acid aqueous solution may contain components other than niobium or/and niobic acid as long as it does not interfere with the feature that no particles of 1.0 nm or more are detected when the particle size distribution is measured using dynamic light scattering.

### (Reactivity with Sodium Hydroxide Aqueous Solution)

The present niobic acid aqueous solution is an aqueous solution wherein a precipitate of Na₈Nb₆O₁₉·13H₂O is formed when 20 g of a sodium hydroxide aqueous solution (25°C) at a concentration of 3 mass% is added to 20 g of the niobic acid aqueous solution (25°C) adjusted to the concentration at which niobium is contained at 1 g per 10 g in terms of Nb₂O₅, while stirring for 1 minute, and then the mixture is allowed to stand while maintaining a liquid temperature at 5°C for 20 hours.

Therefore, it can be said that the present niobic acid aqueous solution is highly reactive with alkali metal salts, and that when reacted with a sodium hydroxide aqueous solution as described above, a precipitate of Na₈Nb₆O₁₉·13H₂O is formed.

Usually, to obtain a niobate hydrate (Na₈Nb₆O₁₉·13H₂O), it is necessary to react Nb hydroxide with a sodium hydroxide aqueous solution by mixing them and heating the mixture to 80°C or more among other things, and it is therefore difficult to easily produce it. However, since the present niobic acid aqueous solution is highly reactive with alkali metal salts, it is possible to obtain a niobate hydrate (Na₈Nb₆O₁₉·13H₂O) simply by mixing and reacting it with a sodium hydroxide aqueous solution, followed by cooling.

Note that confirmation that the formed precipitate is a precipitate of Na₈Nb₆O₁₉·13H₂O can be made by, for example, identification by measuring X-ray diffraction (XRD) as follows. However, it is not limited to this method.

That is, the above formed precipitate can be measured by an X-ray diffraction measurement under the following conditions and identified as Na₈Nb₆O₁₉·13H₂O or not by comparing it with the XRD pattern of ICDD card No. 00-014-0370.

The X-ray diffraction measurement conditions in this case should be as follows.
- Device: MiniFlex II (manufactured by Rigaku Corporation)
- Measuring range (2θ): 5 to 90°
- Sampling width: 0.02°
- Scanning speed: 2.0°/min
- X-ray: CuKα ray
- Voltage: 30 kV
- Current: 15 mA
- Divergence slit: 1.25°
- Scattering slit: 1.25°
- Receiving slit: 0.3 mm

### <The Present Production method>

Next, a suitable method for producing the present niobic acid aqueous solution (referred to as "the present production method") will be described.

An example of the present production method includes a production method including adding a niobium fluoride aqueous solution to an ammonia aqueous solution of a predetermined concentration to obtain a niobium-containing precipitate (referred to as "inverse neutralization step"), removing fluorine from the niobium-containing precipitate (referred to as "F washing step"), making the niobium-containing precipitate obtained by removing fluorine into a slurry, adding at least one selected from amines and ammonia, and reacting them to obtain the present niobic acid aqueous solution (referred to as the "water solubilization step"). However, the method for producing the present niobic acid aqueous solution is not limited to such production method.

As long as the present production method includes the above steps, other steps or other treatments can be added as appropriate.

### (inverse neutralization Step)

In the inverse neutralization step, it is preferable to add a niobium fluoride aqueous solution to an ammonia aqueous solution of a predetermined concentration to obtain a niobium-containing precipitate. That is, it is preferable to inverse neutralize.

It is preferable to perform inverse neutralization, in which a niobium fluoride aqueous solution is added to an ammonia aqueous solution for neutralization, instead of normal neutralization, in which an ammonia aqueous solution is added to a niobium fluoride aqueous solution for neutralization.

It is assumed that the structure of niobic acid will be a structure more soluble in water by performing inverse neutralization.

The niobium fluoride aqueous solution can be prepared by reacting niobium or/and niobic oxide with hydrofluoric acid (HF) to form niobium fluoride (H₂NbF₇), which is then dissolved in water.

Furthermore, this niobium fluoride aqueous solution is preferably prepared by adding water (for example, pure water) to contain 1 to 100 g/L of niobium in terms of Nb₂O₅. In this case, if the niobium concentration is 1 g/L or more, it will result in a niobic acid compound hydrate soluble in water, and therefore the niobium concentration of the niobium fluoride aqueous solution is more preferably 1 g/L or more in terms of Nb₂O₅, of which 10 g/L or more, and even 20 g/L or more is still more preferable when productivity is considered. On the other hand, if the niobium concentration is 100 g/L or less, it will result in a niobic acid compound hydrate soluble in water, and therefore to synthesize a water-soluble niobic acid compound hydrate more reliably, 90 g/L or less is more preferable, of which 80 g/L or less, and even 70 g/L or less is still more preferable.

From the viewpoint of completely dissolving niobium or/and niobic oxide, the pH of the niobium fluoride aqueous solution is preferably 2 or less, of which 1 or less is still more preferable.

On the other hand, the above ammonia aqueous solution preferably has an ammonia concentration of 10 to 30 mass%.

By setting the ammonia concentration of the ammonia aqueous solution used for inverse neutralization to 10 mass% or more, it is possible to prevent Nb from remaining undissolved, and to make niobium or/and niobic acid completely soluble in water. On the other hand, if the ammonia concentration of the ammonia aqueous solution is 30 mass% or less, it is preferable since it is around a saturated aqueous solution of ammonia.

From such viewpoint, the ammonia concentration of the ammonia aqueous solution is preferably 10 mass% or more, of which 15 mass% or more, even 20 mass% or more, and even 25 mass% or more is still more preferable. On the other hand, it is preferably 30 mass% or less, of which 29 mass% or less, and even 28 mass% or less is preferable.

In the inverse neutralization step, the amount of niobium fluoride aqueous solution added with respect to the ammonia aqueous solution (NH₃/Nb₂O₅ molar ratio) is preferably 95 to 500, of which 100 or more or 450 or less, and even 110 or more or 400 or less is still more preferable.

Moreover, the amount of niobium fluoride aqueous solution added with respect to the ammonia aqueous solution (NH₃/HF molar ratio) is preferably 3.0 or more, of which 4.0 or more, and even 5.0 or more is still more preferable, from the viewpoint of the formation of a niobic acid compound that is soluble in amines and dilute ammonia water. On the other hand, from the viewpoint of cost reduction, it is preferably 100 or less, of which 50 or less, and even 40 or less is still more preferable.

Note that both the niobium fluoride aqueous solution and the ammonia aqueous solution may be at room temperature.

In the inverse neutralization step, when adding the niobium fluoride aqueous solution to the ammonia aqueous solution, the neutralization reaction is preferably carried out within 1 minute. That is, instead of adding the niobium fluoride aqueous solution gradually over time, it is preferable to carry out the neutralization reaction by charging the solution within 1 minute, for example, by charging it at once.

In this case, the addition time of the niobium fluoride aqueous solution is preferably within 1 minute, of which within 30 seconds, and even within 10 seconds is still more preferable.

### (F Washing Step)

Fluorine compounds such as ammonium fluoride are present as impurities in the liquid obtained from the neutralization reaction, i.e., the niobium-containing precipitate, and it is therefore preferable to remove them.

The method for removing the fluorine compounds can be any method. For example, a method by filtration using a membrane such as reverse osmosis filtration, ultrafiltration, and microfiltration using ammonia water or pure water, as well as separation by centrifugation and other publicly known methods can be employed.

The F washing step should be performed at room temperature, and there is no need to adjust the respective temperatures.

### (Water Solubilization Step)

Next, the present niobic acid aqueous solution can be obtained by making the niobium-containing precipitate obtained by removing fluorine in the above step into a slurry, adding at least one selected from amines and ammonia water to this slurry, and reacting them.

To make it into a slurry, the niobium-containing precipitate should be dispersed by adding it to a dispersion medium such as pure water.

The water solubilization step should be performed at room temperature, and there is no need to adjust the respective temperatures.

Preferable examples of the amine to be added include alkyl amines, choline ([(CH₃)₃NCH₂CH₂OH]⁺), and choline hydroxide ([(CH₃)₃NCH₂CH₂OH]⁺OH⁻).

As the above alkylamines, those having 1 to 4 alkyl groups can be used. When the alkylamine has 2 to 4 alkyl groups, all 2 to 4 alkyl groups may be the same or may include different groups. As the alkyl group in the alkylamines, alkyl groups having 1 to 6 carbon atoms are preferable, of which those having 4 or less, even 3 or less, and even 2 or less are preferable from the viewpoint of solubility.

Specific examples of the above alkylamines include methylamine, dimethylamine, trimethylamine, tetramethylammonium hydroxide, ethylamine, methyl ethylamine, diethylamine, triethylamine, methyl diethylamine, dimethyl ethylamine, tetraethylammonium hydroxide, n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine, tert-butylamine, n-pentaamine, and n-hexaamine.

Among these, in terms of solubility, methylamine, dimethylamine, trimethylamine, tetramethylammonium hydroxide, ethylamine, methyl ethylamine, diethylamine, triethylamine, methyl diethylamine, dimethyl ethylamine and tetraethylammonium hydroxide are preferable, of which methylamine, dimethylamine, trimethylamine, and tetramethylammonium hydroxide are still more preferable. In particular, methylamine is most preferable.

If ammonia water is used, it is preferably added so as to obtain an NH₃ concentration in the niobium-containing precipitate slurry of 7 mass% or less, still more preferably added so as to obtain a concentration of 6 mass% or less, and especially preferably added so as to obtain a concentration of 5 mass% or less from the viewpoint of solubility. In addition, from the same viewpoint, it is preferably added so as to obtain an NH₃ concentration in the niobium-containing precipitate slurry of 0.2 mass% or more, still more preferably added so as to obtain a concentration of 0.5 mass% or more, and especially preferably added so as to obtain a concentration of 1 mass% or more.

If an amine is used, it is preferably added so as to obtain an amine concentration in the niobium-containing precipitate slurry of 15 mass% or less, still more preferably added so as to obtain a concentration of 12 mass% or less, and especially preferably added so as to obtain a concentration of 10 mass% or less from the viewpoint of solubility. In addition, from the same viewpoint, it is preferably added so as to obtain an amine concentration in the niobium-containing precipitate slurry of 0.5 mass% or more, still more preferably added so as to obtain a concentration of 1.0 mass% or more, and especially preferably added so as to obtain a concentration of 1.5 mass% or more.

After adding the amine, it is preferable to accelerate the reaction by stirring as necessary.

### <Applications>

The present niobic acid aqueous solution can be used, for example, as various coating solutions.

### <Vocabulary>

In the present description, the expression "X to Y" (X and Y are arbitrary numbers) includes the meaning "X or more and Y or less" as well as the meaning "preferably greater than X" or "preferably less than Y," unless otherwise specified.

In addition, the expression "X or more" (X is an arbitrary number) or "Y or less" (Y is an arbitrary number) also includes the meaning "preferably greater than X" or "preferably less than Y".

### Examples

The present invention will be further described by the following Examples. However, the following Examples do not limit the present invention.

### (Example 1)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 1 L of ammonia water (NH₃ concentration: 25 mass%) in less than 1 minute (NH₃/Nb₂O₅ molar ratio = 177.9, NH₃/HF molar ratio = 12.2) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 50% dimethylamine aqueous solution was added so as to obtain a dimethylamine concentration of 7.2 mass%, to prepare a slurry with a Nb₂O₅ solid concentration of 24.0 mass%.

This slurry was stirred for 48 hours to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 2)

100 g of niobium pentoxide was dissolved in 200 g of 55% hydrofluoric acid aqueous solution, to which 1830 mL of ion-exchanged water was added to obtain a niobium fluoride aqueous solution containing 50 g/L of niobium in terms of Nb₂O₅ (Nb₂O₅ = 4.69 mass%).

400 mL of this niobium fluoride aqueous solution was added to 1 L of ammonia water (NH₃ concentration: 25 mass%) in less than 1 minute (NH₃/Nb₂O₅ molar ratio = 177.9, NH₃/HF molar ratio = 12.2) to obtain a reaction solution (pH 12). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 50% dimethylamine aqueous solution was added so as to obtain a dimethylamine concentration of 2.0 mass%, to prepare a slurry with a Nb₂O₅ solid concentration of 10.0 mass%.

This slurry was stirred for 48 hours to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 3)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 50% dimethylamine aqueous solution was added so as to obtain a dimethylamine concentration of 2.0 mass%, to prepare a slurry with a Nb₂O₅ solid concentration of 10.0 mass%.

This slurry was stirred for 48 hours to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 4)

100 g of niobium pentoxide was dissolved in 200 g of 55% hydrofluoric acid aqueous solution, to which 9800 mL of ion-exchanged water was added to obtain a niobium fluoride aqueous solution containing 10.3 g/L of niobium in terms of Nb₂O₅ (Nb₂O₅ = 1 mass%).

2 L of this niobium fluoride aqueous solution was added to 2 L of ammonia water (NH₃ concentration: 25 mass%) in less than 1 minute (NH₃/Nb₂O₅ molar ratio = 345.4, NH₃/HF molar ratio = 23.6) to obtain a reaction solution (pH 12). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 40% methylamine aqueous solution was added so as to obtain a methylamine concentration of 1.0 mass%, to prepare a slurry with a Nb₂O₅ solid concentration of 10.0 mass%.

This slurry was stirred for 48 hours to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 5)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a >99% triethylamine aqueous solution was added so as to obtain a triethylamine concentration of 3.0 mass%, to prepare a slurry with a Nb₂O₅ solid concentration of 10.0 mass%.

The slurry was stirred for 20 days to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 6)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. 25% ammonia water and pure water were added to the slurry to prepare a slurry with a Nb₂O₅ solid concentration of 1.5 mass% and an ammonia concentration of 2.5 mass%.

This slurry was stirred for 48 hours to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 7)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, then a 25% TMAH (tetramethylammonium hydroxide) aqueous solution was added so as to obtain a TMAH concentration of 10.0 mass%, to prepare a slurry with a Nb₂O₅ solid concentration of 10.0 mass%.

The slurry was stirred for 5 days to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 8)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, then a 50% choline aqueous solution was added so as to obtain a choline concentration of 10.0 mass%, to prepare a slurry with a Nb₂O₅ solid concentration of 10.0 mass%.

The slurry was stirred for 5 days to obtain a niobic acid aqueous solution (sample).

The niobic acid aqueous solution (sample) had a pH of11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Example 9)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of this niobium fluoride aqueous solution was added to 2 L of ammonia water (NH₃ concentration: 25 mass%) in less than 1 minute (NH₃/Nb₂O₅ molar ratio = 355.7, NH₃/HF molar ratio = 24.3) to obtain a reaction solution (pH 11). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, then a 27% trimethylamine aqueous solution was added so as to obtain a trimethylamine concentration of 10.0 mass%, to prepare a slurry with a Nb₂O₅ solid concentration of 10.0 mass%.

The slurry was stirred for 5 days to obtain a niobic acid aqueous solution (sample).

The niobic acid aqueous solution (sample) had a pH of 11. In addition, when the particle size of the niobic acid aqueous solution (sample) was measured by dynamic scattering (ELSZ-2000S manufactured by Otsuka Electronics), it could not be measured. That is, no particles with a particle size of 1.0 nm or more were detected.

### (Comparative Example 1)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

200 mL of ammonia water (NH₃ concentration: 25 mass%) was added to 200 mL of this niobium fluoride aqueous solution over 60 minutes (NH₃/Nb₂O₅ molar ratio = 355.7, NH₃/HF molar ratio = 24.3) to obtain a reaction solution (pH 11) (normal neutralization). This reaction solution was a slurry of a niobic acid compound hydrate, in other words, a slurry of a niobium-containing precipitate.

Next, the reaction solution was washed by Nutsche filtration using 5C filter paper until the amount of free fluorine was 100 ppm or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 50% dimethylamine aqueous solution was added so as to obtain a dimethylamine concentration of 2.0 mass%, to prepare a slurry with a Nb₂O₅ solid concentration of 10.0 mass%.

This slurry was stirred for 48 hours, but the obtained solution was not transparent and was a cloudy slurry.

This slurry had a pH of 11. In addition, this solution was diluted 100 times with pure water, and when the particle size of the niobium-containing solution (sample) was measured by dynamic scattering (ELSZ-2000S manufactured by Otsuka Electronics), the volume mean particle size was 282 nm.

### (Comparative Example 2)

100 g of niobium pentoxide was dissolved in 200 g of 55% hydrofluoric acid aqueous solution, to which 830 mL of ion-exchanged water was added to obtain a niobium fluoride aqueous solution containing 100 g/L of niobium in terms of Nb₂O₅ (Nb₂O₅ = 8.84 mass%).

80 mL of this niobium fluoride aqueous solution was added to 390 mL of ammonia water (NH₃ concentration: 5 mass%) in less than 1 minute (NH₃/Nb₂O₅ molar ratio = 34.7, NH₃/HF molar ratio = 2.4) to obtain a reaction solution (pH 9). This reaction solution was a slurry of a niobic acid compound hydrate, in other words, a slurry of a niobium-containing precipitate.

Next, the reaction solution was decanted using a centrifuge and washed until the amount of free fluorine was 100 mg/L or less to obtain a fluorine-removed niobium-containing precipitate. In this case, ammonia water was used as the washing solution.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry to prepare a slurry with a Nb₂O₅ solid concentration of 10.0 mass%.

To this slurry, a 50% dimethylamine aqueous solution was added so as to obtain a dimethylamine concentration of 2.0 mass%, and the mixture was stirred for 48 hours. The obtained solution was not transparent and was a cloudy slurry.

This slurry had a pH of 11. In addition, this solution was diluted 100-fold with pure water, and when the particle size of the niobium-containing solution (sample) was measured by dynamic scattering (ELSZ-2000S manufactured by Otsuka Electronics), the volume mean particle size was 290 nm.

### (Comparative Example 3)

100 g of niobium pentoxide was dissolved in 200 g of 55% hydrofluoric acid aqueous solution, to which 19600 mL of ion-exchanged water was added to obtain a niobium fluoride aqueous solution containing 5.1 g/L of niobium in terms of Nb₂O₅ (Nb₂O₅ = 0.5 mass%).

9 L of this niobium fluoride aqueous solution was added to 5 L of ammonia water (NH₃ concentration: 1 mass%) over 60 minutes (NH₃/Nb₂O₅ molar ratio = 15.5, NH₃/HF molar ratio = 1.1) to obtain a reaction solution (pH 8) (inverse neutralization). This reaction solution was a slurry of a niobic acid compound hydrate, in other words, a slurry of a niobium-containing precipitate.

Next, this slurry was washed using a filtration device (Microza UF: Model ACP-0013D; manufactured by Asahi Kasei Corporation) until the amount of free fluorine in the slurry was 100 mg/L or less to obtain a fluorine-removed niobium-containing precipitate.

Next, the fluorine-removed niobium-containing precipitate was diluted with pure water to obtain a slurry. A portion of this slurry was dried at 110°C for 24 hours and then calcined at 1000°C for 4 hours to produce Nb₂O₅, and the concentration of Nb₂O₅ in the slurry was calculated from its weight. Pure water was added to the slurry, and then a 50% dimethylamine aqueous solution was added so as to obtain a dimethylamine concentration of 2.0 mass%, to prepare a slurry with a Nb₂O₅ solid concentration of 10.0 mass%.

This slurry was stirred for 48 hours. The obtained solution was not transparent and was a cloudy slurry.

This slurry had a pH of 11. In addition, this solution was diluted 100-fold with pure water, and when the particle size of the niobium-containing solution (sample) was measured by dynamic scattering (ELSZ-2000S manufactured by Otsuka Electronics), the volume mean particle size was 293 nm.

### <Measurement by Dynamic Light Scattering>

The particle sizes of the niobic acid aqueous solutions (samples) obtained in the Examples and Comparative Examples were measured using the dynamic light scattering particle size distribution analyzer ELSZ-2000S (manufactured by Otsuka Electronics).

Note that the detection limit of the dynamic light scattering particle size distribution analyzer used was 0.6 nm, and therefore when measurement was not possible, it was indicated as "<0.6 nm" in the table.

In addition, when particles of 1.0 nm or more were detected, colloidal particles were considered "present", and if no particles of 1.0 nm or more were detected, it was considered that there were "no" colloidal particles.

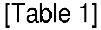

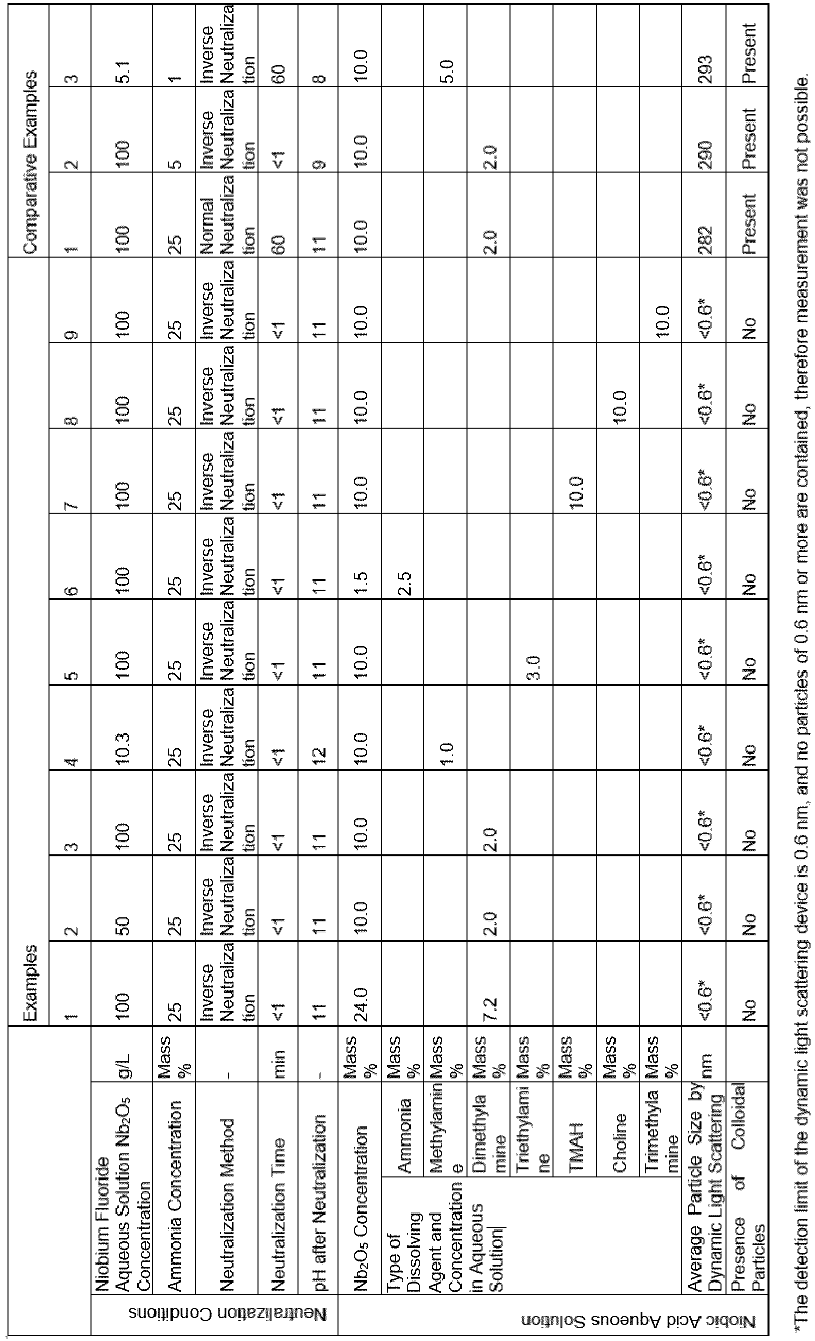

### (Discussion)

The niobic acid aqueous solutions (samples) obtained in Examples 1 to 9 were solutions in which at least no particles of 1.0 nm or more were detected when the particle sizes were measured using dynamic light scattering. In other words, they were found to be completely dissolved and to contain at least no colloidal particles or/and particles larger than colloidal particles. Therefore, the niobic acid aqueous solutions (samples) obtained in Examples 1 to 9 have higher dispersibility than an ammonium niobate sol and have better solubility than a complex salt of niobic acid.

### <Reactivity Test with NaOH>

If the niobium concentration of each of the niobic acid aqueous solutions (samples) obtained in Examples 1 to 9 was higher than 10 mass% in terms of Nb₂O₅, pure water was added to dilute the niobium concentration to 10 mass% in terms of Nb₂O₅, and the diluted niobic acid aqueous solutions were used as test samples for the reactivity test. On the other hand, if the niobium concentration of the niobic acid aqueous solutions (samples) was 10 mass% or less in terms of Nb₂O₅, no dilution with pure water was performed, and the solutions were used as is as test samples for the reactivity test.

When 20 g of 3 mass% NaOH aqueous solution (25°C) was slowly added to 20 g of the niobic acid aqueous solution (2 g in terms of Nb₂O₅) as a test sample for the reactivity test over 1 minute while stirring with a magnetic stirrer, a slightly cloudy solution (25°C) was obtained. When this cloudy solution (25°C) was allowed to stand in a cooler while maintaining a liquid temperature of 5°C for 20 hours, a precipitate was formed. The precipitate formed was filtered through a Nutsche filter using 5C filter paper, washed with pure water, and then vacuum dried for 15 hours by heating it in a vacuum drying oven at 60°C (set temperature). The dried precipitate was ground in an agate mortar, and an X-ray diffraction measurement was performed on the obtained powder.

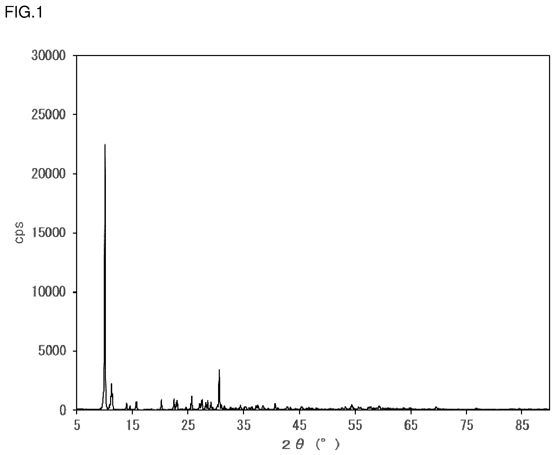

For all the niobic acid aqueous solutions (samples) obtained in any of Examples 1 to 9, this precipitate was identified as consisting of Na₈Nb₆O₁₉·13H₂O of ICDD card No. 00-014-0370, based on the results of X-ray diffraction measurement (XRD pattern). Note that the XRD pattern of Example 4 is shown in Figure 1 as a representative figure.

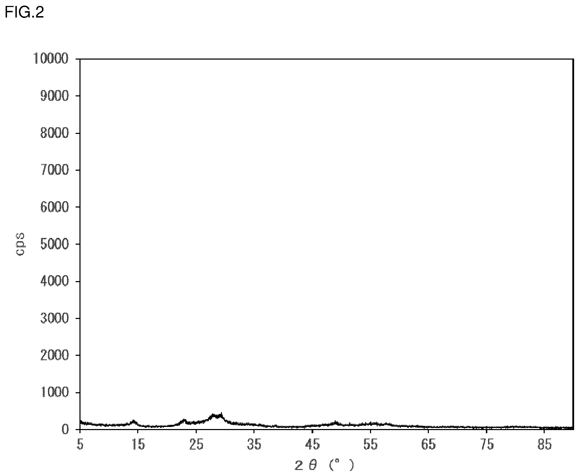

On the other hand, similar tests were also conducted on the niobium-containing solutions (samples) of Comparative Examples 1 to 3, but the precipitate was amorphous and was not identified as Na₈Nb₆O₁₉·13H₂O of ICDD Card No. 00-014-0370. Note that the XRD pattern of Comparative Example 3 is shown in Figure 2 as a representative figure.

## Claims

1. A niobic acid aqueous solution comprising 0.1 to 40 mass% of niobium in terms of Nb₂O₅, wherein no particles of 1.0 nm or more are detected in the particle size distribution measurement using dynamic light scattering.

2. The niobic acid aqueous solution according to claim 1, comprising a component derived from at least one selected from amines and ammonia.

3. A niobic acid aqueous solution, wherein a precipitate of Na₈Nb₆O₁₉·13H₂O is formed when 20 g of a sodium hydroxide aqueous solution (25°C) at a concentration of 3 mass% is added to 20 g of the niobic acid aqueous solution (25°C) adjusted to the concentration at which niobium is contained at 1 g per 10 g in terms of Nb₂O₅, while stirring for 1 minute, and then the mixture is allowed to stand while maintaining a liquid temperature at 5°C for 20 hours.

4. A method for producing a niobic acid aqueous solution comprising the following three steps:
(1) a step of adding a niobium fluoride aqueous solution comprising 1 to 100 g/L of niobium in terms of Nb₂O₅ to an ammonia aqueous solution having an ammonia concentration of 10 to 30 mass%, and reacting them to obtain a niobium-containing precipitate
(2) a step of removing fluorine from the niobium-containing precipitate obtained in the above step
(3) a step of making the niobium-containing precipitate obtained by removing fluorine into a slurry, adding at least one selected from amines and ammonia, and reacting them.

5. The method for producing a niobic acid aqueous solution according to claim 4, wherein in the step (1), a neutralization reaction is carried out within 1 minute of addition of the niobium fluoride aqueous solution to the ammonia aqueous solution.
